# EUROPEAN PATENT APPLICATION

(11) **EP 4 044 308 A2**
(43) Date of publication of application: **17.08.2022**
(21) Application number: 20894272.2
(22) Date of filing: 24.11.2020
(51) Int. Cl.: H01M 10/0562, C01B 25/45, C04B 35/01, C04B 35/48, H01B 1/08, H01M 10/052

(54) **ION CONDUCTIVE CERAMIC AND METHOD FOR PREPARING SAME**

(30) Priority: 26.11.2019 KR 20190153627
(71) Applicant: Seven King Energy Co., Ltd., Cheongwon-gu Cheongju-si Ch'ungch'ong bukto 28503 (KR)
(72) Inventor: KIM, Jae Kwang, Cheongju-si Chungcheongbuk-do 28317 (KR)
(74) Representative: BCKIP
(86) International application number: PCT/KR2020/016669
(87) International publication number: WO 2021/107553

(57) **Abstract**

The present invention relates to a ceramic solid electrolyte, which is a key component of an all-solid-state lithium secondary battery, for improving safety, and a method for synthesizing the same. The present invention relates to an oxide-based conductive ceramic of a new NASICON structure of the chemical formula Li₁₊ₓAlₓX₂₋ₓP₃O₁₂ (X is Zr, Si, Sn, or Y, 0<x<2) or Li₁₊ₓZr₂XₓP₃₋ₓO₁₂ (X=Si, Sn, Ge, or Y, 1.5≤x≤2.3). The present invention relates to a method for manufacturing an oxide-based conductive ceramic having the above novel NASICON structure.

## Description

### [Technical field]

The present invention relates to an oxide-based ceramic having a NASICON structure and having lithium ion conductivity. The lithium ion conductive ceramic of the present invention is a material of a new chemical structure and has excellent ion conductivity. The present invention also relates to a method for synthesizing the novel ceramic. According to the preferable synthesis method of the present invention, the new ceramic is synthesized by mixing raw materials using water as a solvent and performing a rotary concentration process or a spray drying process. The ceramic made in this way is spherical particle with an even distribution. The ceramic can be used as a ceramic solid electrolyte. When the ceramic particle of the present invention is made into an electrolyte and applied to a battery, excellent electrochemical properties are exhibited.

### [Background Technology]

The lithium secondary battery market is expanding not only to small IT devices, but also to mid- to large-sized markets such as electric vehicles and ESS systems. Conventional lithium secondary batteries use liquid electrolytes. However, packaging and enlarging using liquid electrolytes that have explosive properties is like making a powder box that never knows when it will explode. In addition, a lithium secondary battery using liquid electrolytes has a risk of explosion when the temperature rises, so an expensive safety device such as a vent cap or a positive temperature coefficient (PTC) device is required. The use of such a safety device is a cause of lowering the energy density of the lithium secondary battery and increasing the manufacturing cost of the battery. Therefore, the use of expensive safety devices is a disadvantage in both small-capacity batteries used in portable electronic devices and large-capacity batteries such as power sources of electric vehicles in terms of energy density and manufacturing cost of secondary batteries.

Accordingly, research and development for making a better lithium secondary battery is being actively carried out, and various technologies for solving the problems of the existing lithium secondary battery are being proposed. Among them, all-solid-state batteries are the subject of much interest. All-solid-state batteries do not use the liquid electrolyte and polymer separator used in conventional lithium secondary batteries. All-solid-state batteries use a solid-state electrolyte so that the solid-state electrolyte functions as an existing liquid electrolyte and separator.

By using the solid electrolyte, the risk of ignition and explosion of the existing liquid electrolyte can be eliminated, and the energy density of the battery can be increased by reducing the space within the battery. The solid electrolyte is divided into a polymer solid electrolyte and a ceramic solid electrolyte. Polymer solid electrolytes are difficult to manufacture or handle, so there are many difficulties in commercialization. Polymer solid electrolytes also have a problem of low ionic conductivity. In order to improve the low ionic conductivity of the polymer solid electrolytes, gel polymer electrolytes having liquid electrolytes in them is also being studied. However, since the gel polymer electrolytes contain a lot of liquid electrolytes, they have a disadvantage in that they have no choice but to exhibit the disadvantages of the liquid electrolytes. Therefore, interest in ceramic solid electrolytes is increasing recently.

Lithium ion conductive ceramic electrolytes can be largely divided into sulfide-based lithium ion conductive ceramic electrolytes and oxide-based lithium ion conductive ceramic electrolytes. The sulfide-based solid electrolytes are relatively easy to synthesize compared to oxide-based solid electrolytes and have ductility, so they do not require high heat treatment during processing and exhibits high conductivity. For example, one of the thio-LISICON, Li_{3.25}Ge_{0.25}P_{0.75}S₄, exhibits an ionic conductivity of 2.2 mS/cm. LGPS (Li₁₀GeP₂S₁₂) exhibits an ionic conductivity of 12 mS/cm. However, the sulfide-based solid electrolytes have fatal disadvantages such as a strong odor, side reactions at the negative electrode, and instability in air and water. Therefore, interest in stable oxide-based solid electrolytes is increasing. Representative oxide-based solid electrolytes include LATP (Li₁₊ₓAlₓTi₂₋ₓ(PO₄)₃) (0<x<2), LLZO (Li₇La₃Zr₂O₁₂), and the like. LATP and LLZO are easy to commercialize because they have excellent ionic conductivity and are stable in the atmosphere. However, these oxide-based solid electrolytes have Ti, which undergoes a reduction reaction in the negative electrode, or have seven lithiums, so they are unstable in air and generate gas. In addition, most of them are manufactured by the solid-state method, so the particles are not even and the crystallinity varies greatly depending on the heat treatment temperature.

Therefore, there is a need for ion conductive ceramics with a new chemical structure. Oxide-based ceramics that are stable in air need to be developed as new ceramics.

### [Detailed description of the invention]

### [Problem to be solved]

LATP (Li₁₊ₓAlₓTi₂₋ₓ(PO₄)₃) having a NASICON structure or LLZO (Li₇La₃Zr₂O₁₂) having a garnet structure has been mainly used as conventional oxide-based ceramic solid electrolytes because of their excellent ionic conductivity. However, they have Ti among the chemical components, so a reduction reaction occurs in the negative electrode part, or there are 7 lithium elements, so they have a high reactivity with air and are unstable in the atmosphere. An object of the present invention is to provide novel oxide-based conductive ceramics that have excellent ionic conductivity and are stable in air. Another object of the present invention is to improve the conventional method for synthesizing ceramic solid electrolytes having an even distribution and shape of particles, a spherical shape of the particles, and excellent crystallinity.

### [Means to solve the problem]

In order to solve the problem of the conventional ceramic solid electrolytes, we want to provide oxide-based conductive ceramics, which do not contain Ti and contain only 1.3 to 2.3 lithium elements, having excellent ionic conductivity and being stable in air, and their preparation method. The ceramics with a new structure can be manufactured by a conventional solid-state method. When the oxide-based conductive ceramic particles are manufactured by a new method of the present invention, wherein the raw materials of the ceramic solid electrolyte are mixed, ball milled, and subjected to rotary concentration method or spraying method, the shape of the ceramic particles is uniformly spherical and the particle distribution is even. When the oxide-based ceramic particles prepared in this way are used as electrolytes and applied to a battery, excellent electrochemical properties are exhibited.

### [Effects of the Invention]

According to the present invention, it is possible to provide an oxide-based conductive ceramic of a NASICON structure having an excellent electrochemical reaction, being stable in the atmosphere, and having high ionic conductivity.

According to the present invention, a high-performance ceramic electrolyte having an even shape and distribution of particles can be manufactured.

According to the present invention, it is possible to manufacture high-performance ceramic particles having a spherical particle shape and uniform distribution.

### [Brief Description of Drawings]

FIG. 1 is a SEM image of Li₁₊ₓAlₓSi₂₋ₓP₃O₁₂ (x=0.3), oxide-based conductive ceramics of a NASICON structure synthesized by a general solid-state method.
FIG. 2 is a SEM image of Li₁₊ₓZr₂SiₓP₃₋ₓO₁₂ (x=2), oxide-based conductive ceramics of a NASICON structure synthesized by a general solid-state method.
FIG. 3 is an XRD pattern of Li₁₊ₓAlₓSi₂₋ₓP₃O₁₂ (x=0.3), oxide-based conductive ceramics of a NASICON structure.
FIG. 4 is a SEM photograph of Li₁₊ₓAlₓSi₂₋ₓP₃O₁₂ (x=0.3), oxide-based conductive ceramic particles of a NASICON structure.
FIG. 5 is a graph showing an ionic conductivity according to temperature of Li₁₊ₓAlₓSi₂₋ₓP₃O₁₂ (x=0.3), oxide-based conductive ceramics of a NASICON structure.
FIG. 6 is an XRD pattern of Li₁₊ₓAlₓSn₂₋ₓP₃O₁₂ (x=0.5), oxide-based conductive ceramics of a NASICON structure.
FIG. 7 is a SEM photograph of Li₁₊ₓAlₓSn₂₋ₓP₃O₁₂ (x=0.5), oxide-based conductive ceramic particles of a NASICON structure.
FIG. 8 is a graph showing an ionic conductivity according to temperature of Li₁₊ₓAlₓSn₂₋ₓP₃O₁₂ (x=0.5), oxide-based conductive ceramics of a NASICON structure.
FIG. 9 is XRD patterns of Li₁₊ₓZr₂SiₓP₃₋ₓO₁₂ (x=2) and Li₁₊ₓZr₂SnₓP₃₋ₓO₁₂ (x=2), oxide-based conductive ceramics of a NASICON structure.
FIG. 10 is a SEM photograph of Li₁₊ₓZr₂SiₓP₃₋ₓO₁₂ (x=2), oxide-based conductive ceramic particles of a NASICON structure.
FIG. 11 is a graph showing an ionic conductivity according to temperature of Li₁₊ₓZr₂SiₓP₃₋ₓO₁₂ (x=2), oxide-based conductive ceramics of a NASICON structure.
FIG. 12 is a SEM photograph of Li₁₊ₓZr₂SnₓP₃₋ₓO₁₂ (x=2), oxide-based conductive ceramic particles of a NASICON structure.
FIG. 13 is a photograph of particles of Li_{1.3}Al_{0.3}Si_{1.7}P₃O₁₂, ceramic solid electrolytes prepared through a rotary concentration process.
FIG. 14 is a photograph of particles of Li_{1.3}Al_{0.3}Si_{1.7}P₃O₁₂, ceramic solid electrolytes prepared through a spraying process.

### [Best mode for carrying out the invention]

The specific content of the present invention will be described in more detail. However, this is to present one embodiment of the present invention as an example. The present invention is not limited by the following description and the present invention is only defined by the following claims.

The novel oxide-based conductive ceramics of NASICON structure according to the present invention may have a structure as shown in Chemical Formula 1 below.

[Chemical Formula 1] Li₁₋ₓAlₓX₂₋ₓP₃O₁₂

(X=Zr, Si, Sn, or Y, and 0<x<2)

The novel oxide-based conductive ceramics of NASICON structure according to the present invention may have a structure as shown in Chemical Formula 2 below.

[Chemical Formula 2] Li₁₊ₓZr₂XₓP₃₋ₓO₁₂

(X is Si, Sn, Ge, or Y, and 1.5≤x≤2.3)

In one embodiment of the present invention, the raw materials of the ceramic solid electrolyte are mixed, the raw materials are sufficiently mixed by ball milling, and the mixture after ball milling is subjected to first heat treatment and secondary heat treatment to result in the conductive ceramics of Chemical Formula 1. The first heat treatment may be to calcinate the ceramic particles, and the second heat treatment may be to fire the ceramic particles.

In one embodiment of the present invention, the raw materials of the ceramic solid electrolyte are mixed using water as a solvent, the raw materials are sufficiently mixed by ball milling in a solution state, the mixture after ball milling is dried in a dryer, and is subjected to first heat treatment and secondary heat treatment to result in the conductive ceramics of Chemical Formula 1. The first heat treatment may be to calcinate the ceramic particles, and the second heat treatment may be to fire the ceramic particles.

The ball milling speed may be 150 to 350 rpm, 200 to 350 rpm, 250 to 350 rpm, and 250 to 300 rpm.

The ball milling mixing time may be 12 hours to 48 hours, 12 hours to 36 hours, and 24 hours to 36 hours.

The drying time in the dryer may be 12 hours to 36 hours, preferably 18 hours to 24 hours, and the drying temperature may be 60°C to 100°C, preferably 70°C to 80°C.

The first heat treatment temperature may be 300 °C to 500 °C, preferably 350 °C to 450 °C. The secondary heat treatment temperature may be 800°C to 1,200°C, preferably 850°C to 1,100°C, and more preferably 900°C to 1,100°C. Depending on the material and conditions, 800°C to 1,000°C may be preferred, and 900°C to 1,000°C may be preferred.

The first heat treatment time and the second heat treatment time may be 2 hours to 12 hours, 2 hours to 11 hours, 2 hours to 10 hours, 2 hours to 9 hours, 2 hours to 8 hours, 2 hours to 7 hours, 2 hours to 6 hours, 2 hours to 5 hours, 2 hours to 4 hours, 3 hours to 12 hours, 3 hours to 11 hours, 3 hours to 10 hours, 3 hours to 9 hours, 3 hours to 8 hours, 3 hours to 7 hours, 3 hours to 6 hours, 3 hours to 5 hours, 3 hours to 4 hours, 4 hours to 12 hours, 4 hours to 11 hours, 4 hours to 10 hours, 4 hours to 9 hours, 4 hours to 8 hours, 4 hours to 7 hours, 4 hours to 6 hours, 4 hours to 5 hours, 5 hours to 12 hours, 5 hours to 11 hours, 5 hours to 10 hours, 5 hours to 9 hours, 5 hours to 8 hours, 5 hours to 7 hours, 5 hours to 6 hours, 6 hours to 12 hours, 6 hours to 11 hours, 6 hours to 10 hours, 6 hours to 9 hours, 6 hours to 8 hours and 6 hours to 7 hours.

In one embodiment of the present invention, the raw materials of the ceramic solid electrolyte are mixed, the raw materials are sufficiently mixed by ball milling, and the mixture after ball milling is subjected to first heat treatment and secondary heat treatment to result in the conductive ceramics of Chemical Formula 2. The first heat treatment may be to calcinate the ceramic particles, and the second heat treatment may be to fire the ceramic particles.

In one embodiment of the present invention, the raw materials of the ceramic solid electrolyte are mixed using water as a solvent, the raw materials are sufficiently mixed by ball milling in a solution state, the mixture after ball milling is dried in a dryer, and is subjected to first heat treatment and secondary heat treatment to result in the conductive ceramics of Chemical Formula 2. The first heat treatment may be to calcinate the ceramic particles, and the second heat treatment may be to fire the ceramic particles.

The ball milling mixing time may be 8 hours to 48 hours, 8 hours to 36 hours, 8 hours to 24 hours, 10 hours to 24 hours, and 10 hours to 18 hours.

The drying time in the dryer may be 12 hours to 36 hours, preferably 18 hours to 24 hours, and the drying temperature may be 60°C to 100°C, preferably 70°C to 80°C.

The first heat treatment temperature may be 300 °C to 500 °C, preferably 350 °C to 450 °C. The secondary heat treatment temperature may be 800°C to 1,200°C, preferably 850°C to 1,100°C, and more preferably 900°C to 1,100°C. Depending on the material and conditions, 800°C to 1,000°C may be preferred, and 900°C to 1,000°C may be preferred.

The first heat treatment time and the second heat treatment time may be 2 hours to 13 hours, 2 hours to 12 hours, 2 hours to 11 hours, 2 hours to 10 hours, 2 hours to 9 hours, 2 hours to 8 hours, 2 hours to 7 hours, 2 hours to 6 hours, 2 hours to 5 hours, 2 hours to 4 hours, 3 hours to 13 hours, 3 hours to 12 hours, 3 hours to 11 hours, 3 hours to 10 hours, 3 hours to 9 hours, 3 hours to 8 hours, 3 hours to 7 hours, 3 hours to 6 hours, 3 hours to 5 hours, 3 hours to 4 hours, 4 hours to 13 hours, 4 hours to 12 hours, 4 hours to 11 hours, 4 hours to 10 hours, 4 hours to 9 hours, 4 hours to 8 hours, 4 hours to 7 hours, 4 hours to 6 hours, 4 hours to 5 hours, 5 hours to 13 hours, 5 hours to 12 hours, 5 hours to 11 hours, 5 hours to 10 hours, 5 hours to 9 hours, 5 hours to 8 hours, 5 hours to 7 hours, 5 hours to 6 hours, 6 hours to 13 hours, 6 hours to 12 hours, 6 hours to 11 hours, 6 hours to 10 hours, 6 hours to 9 hours, 6 hours to 8 hours, 6 hours to 7 hours, 5 hours to 13 hours, 5 hours to 12 hours, 5 hours to 11 hours, 5 hours to 10 hours, 5 hours to 9 hours, 5 hours to 8 hours, 5 hours to 7 hours, 5 hours to 6 hours, 6 hours to 13 hours, 6 hours to 12 hours, 6 hours to 11 hours, 6 hours to 10 hours, 6 hours to 9 hours, 6 hours to 8 hours and 6 hours to 7 hours.

In one embodiment of the present invention, the mixture after ball milling is firstly dried with a rotary concentration step or spray drying step, and secondly dried at 60 °C to 100 °C, preferably 60 °C to 80 °C, more preferably 70 °C to 80 °C, the first heat treatment is performed, and the second heat treatment is performed to prepare oxide-based conductive ceramics of Chemical Formula 1 or 2. The temperature of the rotary concentration process may be 60°C and 100°C, preferably 70°C to 80°C. The temperature of the spray drying process may be 80 °C to 300 °C, preferably 100 °C to 200 °C.

### [Examples of the invention]

### Example 1

### Synthesis of Oxide-Based Conductive Ceramics of NASICON Structure with Chemical Composition of Li₁₊ₓAlₓSi₂₋ₓP₃O₁₂ (x=0.3)

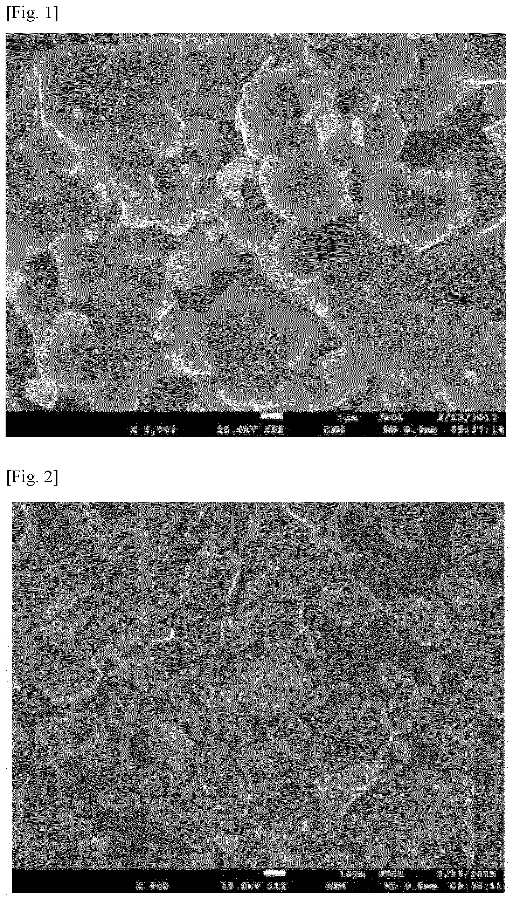

LiCl, Al(NO₃)₃·9H₂O, NH₄H₂PO₄, and C₈H₂₀O₄Si were calculated according to chemical equivalents, and then 1.3:0.3:3:1.7 moles were mixed. After that, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 24 hours. After mixing with ball milling for 24 hours, the zirconia balls were removed. Thereafter, a first heat treatment was performed at 400 °C for 3 hours. After grinding the heat-treated powder in a mortar, a secondary heat treatment was performed at 900°C for 4 hours to synthesize oxide-based conductive ceramics of NASICON structure with a chemical composition of Li₁₊ₓAlₓSi₂₋ₓP₃O₁₂ (x=0.3). The SEM photograph of the conductive ceramic particles synthesized in Example 1 was shown in FIG. 1.

### Example 2

### Synthesis of Oxide-Based Conductive Ceramics of NASICON Structure with Chemical Composition of Li₁₊ₓZr₂SiₓP₃₋ₓO₁₂ (x=2)

Li₃PO₄, SiO₂, and ZrO₂ were calculated according to chemical equivalents, and then 1:2:2 moles were mixed. After that, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 10 hours. After mixing with ball milling for 10 hours, the zirconia balls were removed. Thereafter, a first heat treatment was performed at 400°C for 5 hours. After grinding the heat-treated powder in a mortar, a secondary heat treatment was performed at 1,100°C for 12 hours to synthesize oxide-based conductive ceramics of NASICON structure with a chemical composition of Li₁₊ₓZr₂SiₓP₃₋ₓO₁₂ (x=2). The SEM photograph of the conductive ceramic particles synthesized in Example 2 was shown in FIG. 2.

### Example 3

### Synthesis of Oxide-Based Conductive Ceramics of NASICON Structure with Chemical Composition of Li₁₊ₓAlₓSi₂₋ₓP₃O₁₂ (x=0.3)

LiCl, Al(NO₃)₃·9H₂O, NH₄H₂PO₄, and C₈H₂₀O₄Si were calculated according to chemical equivalents, and 1.3:0.3:3:1.7 moles were added to 500 ml of distilled water. After that, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 24 hours. After mixing with ball milling for 24 hours, the zirconia balls were removed and dried at 80°C for 12 hours. Thereafter, a first heat treatment was performed at 400°C for 3 hours. After grinding the heat-treated powder in a mortar, secondary heat treatment was performed at 900°C for 4 hours to synthesize oxide-based conductive ceramics of NASICON structure with a chemical composition of Li₁₊ₓAlₓSi₂₋ₓP₃O₁₂ (x=0.3).

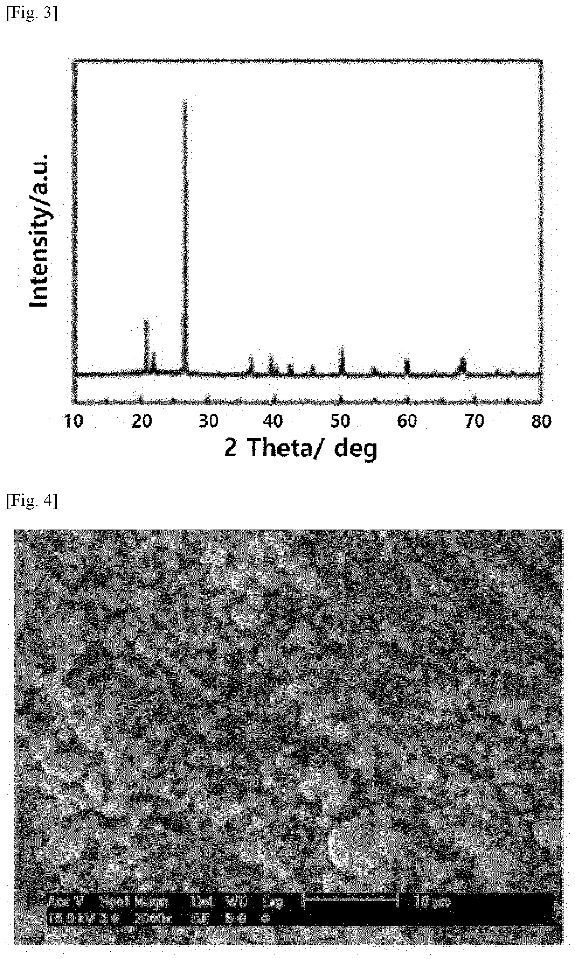

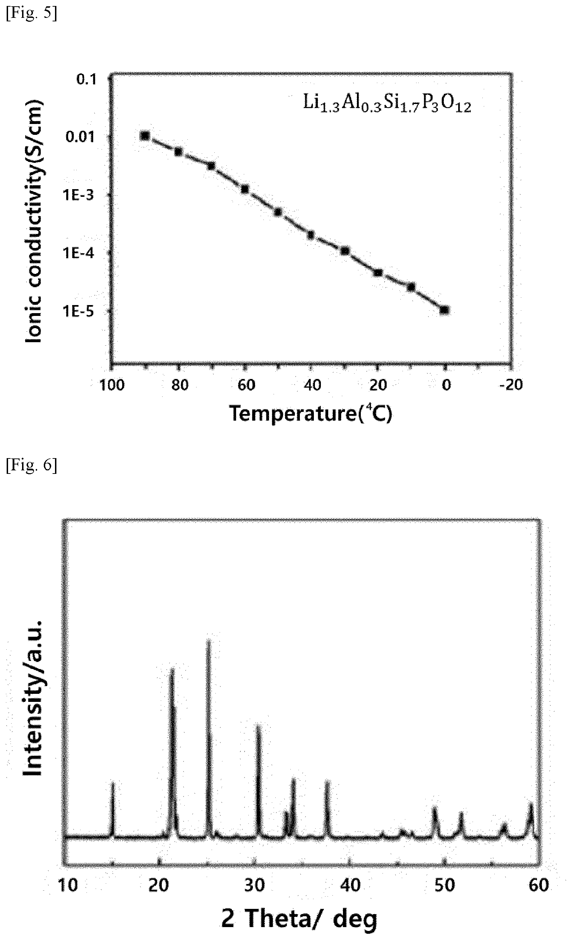

The XRD pattern of the conductive ceramics synthesized in this way was shown in FIG. 3. The SEM photograph of the conductive ceramic particles synthesized in Example 3 was shown in FIG. 4. The ionic conductivity according to the temperature of the conductive ceramics synthesized in Example 3 was shown in FIG. 5.

The conductive ceramic of Li₁₊ₓAlₓSi₂₋ₓP₃O₁₂ (x=0.3) had an ionic conductivity of 1.08×10⁻⁴ S/cm at 30°C, and an average particle size of 4 *µ*m.

### Example 4

### Synthesis of Oxide-Based Conductive Ceramics of NASICON Structure with Chemical Composition of Li₁₊ₓAlₓSn₂₋ₓP₃O₁₂ (x=0.5)

LiCl, Al(NO₃)₃·9H₂O, NH₄H₂PO₄, and SnO₂ were calculated according to chemical equivalents, and 1.5:0.5:3:1.5 moles were added to 500 ml of distilled water. After that, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 24 hours. After mixing with ball milling for 24 hours, the zirconia balls were removed and dried at 80°C for 12 hours. Thereafter, a first heat treatment was performed at 400°C for 3 hours. After grinding the heat-treated powder in a mortar, secondary heat treatment was performed at 900°C for 4 hours to synthesize oxide-based conductive ceramics of NASICON structure with a chemical composition of Li₁₊ₓAlₓSn₂₋ₓP₃O₁₂ (x=0.5).

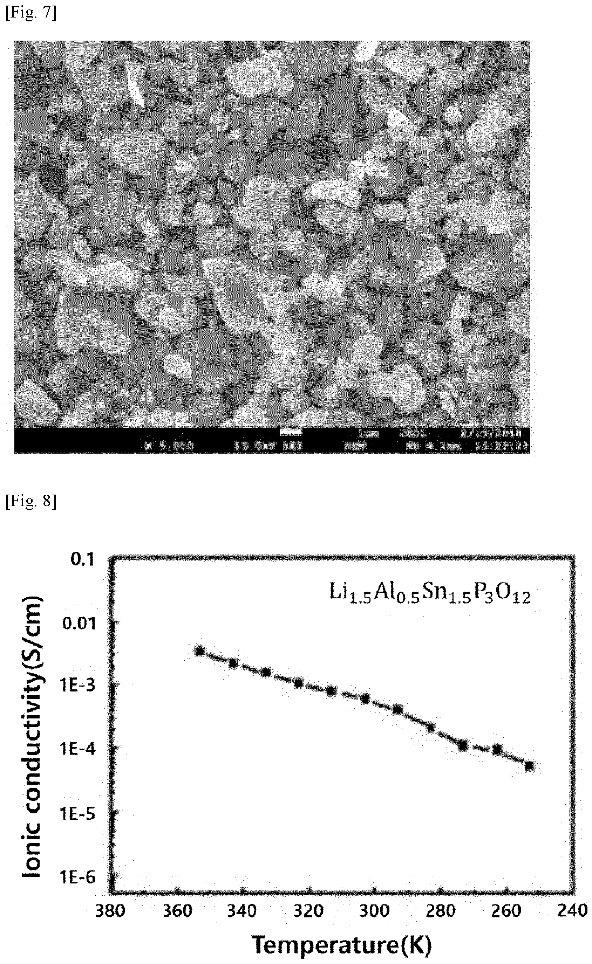

The XRD pattern of the conductive ceramics synthesized in this way was shown in FIG. 6. The SEM photograph of the conductive ceramic particles synthesized in Example 4 was shown in FIG. 7. The ionic conductivity according to the temperature of the conductive ceramics synthesized in Example 4 was shown in FIG. 8.

The conductive ceramic of Li₁₊ₓAlₓSn₂₋ₓP₃O₁₂ (x=0.5) had an ionic conductivity of 6.07×10⁻⁴ S/cm at 30°C, and an average particle size of 3 *µ*m.

### Example 5

### Synthesis of Oxide-Based Conductive Ceramics of NASICON Structure with Chemical Composition of Li₁₊ₓZr₂SiₓP₃₋ₓO₁₂ (x=2)

Li₃PO₄, SiO₂, and ZrO₂ were calculated according to chemical equivalents, and 1:2:2 moles were added to 500 ml of distilled water. After that, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 10 hours. After mixing with ball milling for 10 hours, the zirconia balls were removed and dried at 80°C for 12 hours. Thereafter, a first heat treatment was performed at 400°C for 5 hours. After grinding the heat-treated powder in a mortar, secondary heat treatment was performed at 1,100°C for 12 hours to synthesize oxide-based conductive ceramics of NASICON structure with a chemical composition of Li₁₊ₓZr₂SiₓP₃₋ₓO₁₂ (x=2).

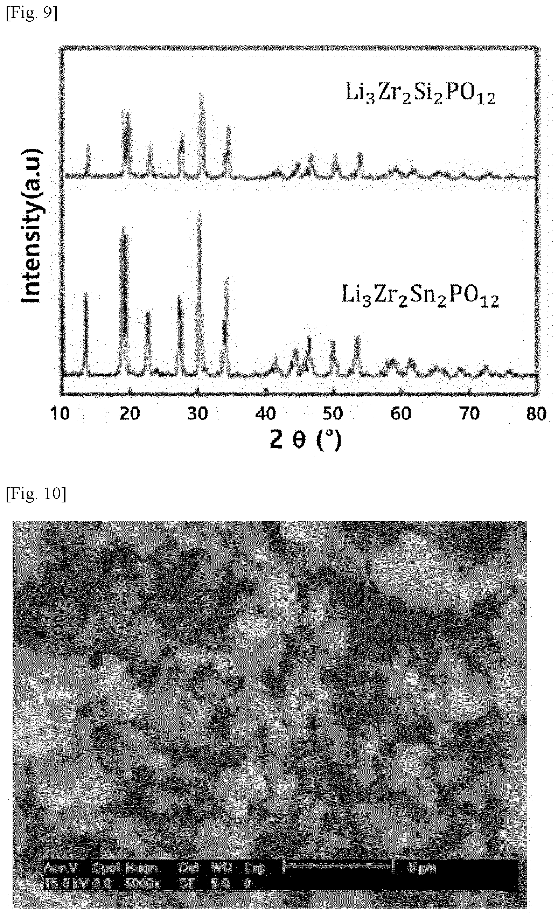

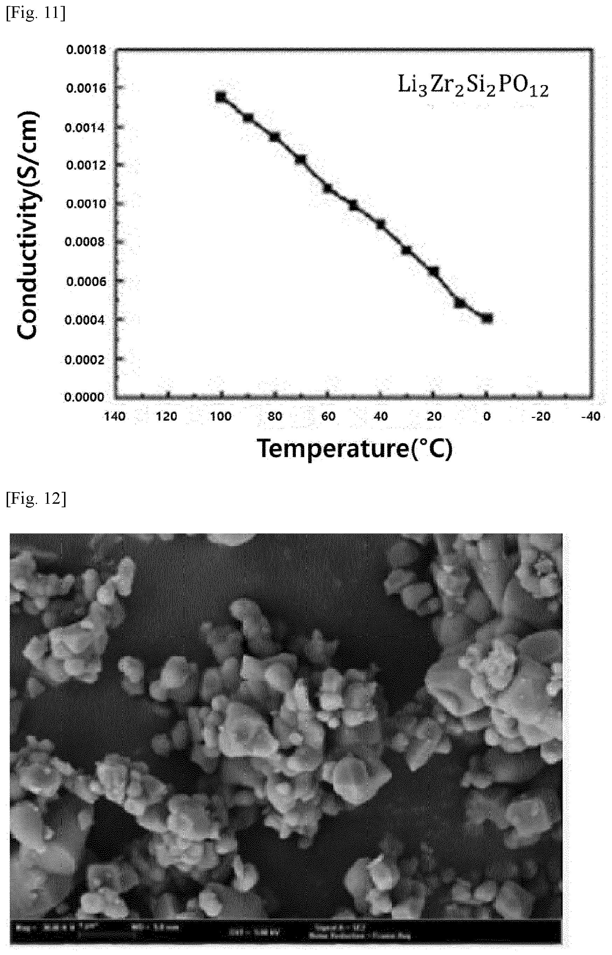

The XRD pattern of the conductive ceramics synthesized in this way was shown in FIG. 9. The SEM photograph of the conductive ceramic particles synthesized in Example 5 was shown in FIG. 10. The ionic conductivity according to the temperature of the conductive ceramics synthesized in Example 5 was shown in FIG. 11.

The conductive ceramic of Li₁₊ₓZr₂SiₓP₃₋ₓO₁₂ (x=2) had an ionic conductivity of 7.6×10⁻⁴ S/cm at 30°C, and an average particle size of 4 *µ*m.

### Example 6

### Synthesis of Oxide-Based Conductive Ceramics of NASICON Structure with Chemical Composition of Li₁₊ₓZr₂SnₓP₃₋ₓO₁₂ (x=2)

Li₃PO₄, SnO₂, and ZrO₂ were calculated according to chemical equivalents, and 1:2:2 moles were added to 500 ml of distilled water. After that, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 10 hours. After mixing with ball milling for 10 hours, the zirconia balls were removed and dried at 80°C for 12 hours. Thereafter, a first heat treatment was performed at 400°C for 5 hours. After grinding the heat-treated powder in a mortar, secondary heat treatment was performed at 1,100°C for 12 hours to synthesize oxide-based conductive ceramics of NASICON structure with a chemical composition of Li₁₊ₓZr₂SnₓP₃₋ₓO₁₂ (x=2).

The XRD pattern of the conductive ceramics synthesized in this way was shown in FIG. 9.

The conductive ceramic of Li₁₊ₓZr₂SnₓP₃₋ₓO₁₂ (x=2) had an ionic conductivity of 4.8×10⁻⁴ S/cm at 30°C, and an average particle size of 5 *µ*m.

### Example 7

### Synthesis of Oxide-Based Conductive Ceramics of NASICON Structure with Chemical Composition of Li_{1.3}Al_{0.3}Si_{1.7}P₃O₁₂

LiCl, Al(NO₃)₃·9H₂O, NH₄H₂PO₄, and SiO₂ were calculated according to chemical equivalents, and 1.3:0.3:3:1.7 moles were added to 500 ml of distilled water. Thereafter, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 24 hours. After removing the zirconia balls, the raw materials were firstly dried by rotary concentration at 80°C for 6 hours, put in an evaporation dish, and secondly dried sufficiently at 80°C for 24 hours, then the dried raw materials were ground with a mortar to make into powder and subjected to heat treatment. In the first heat treatment, the sample was heated from room temperature to 400°C for calcination, then heat treated for 4 hours, and cooled naturally until it reached 100°C or less. Secondary heat treatment was performed at 1,000°C for 4 hours to fire the sample. Then, it was pulverized to obtain oxide-based conductive ceramics of NASICON structure with a chemical composition of Li_{1.3}Al_{0.3}Si_{1.7}P₃O₁₂.

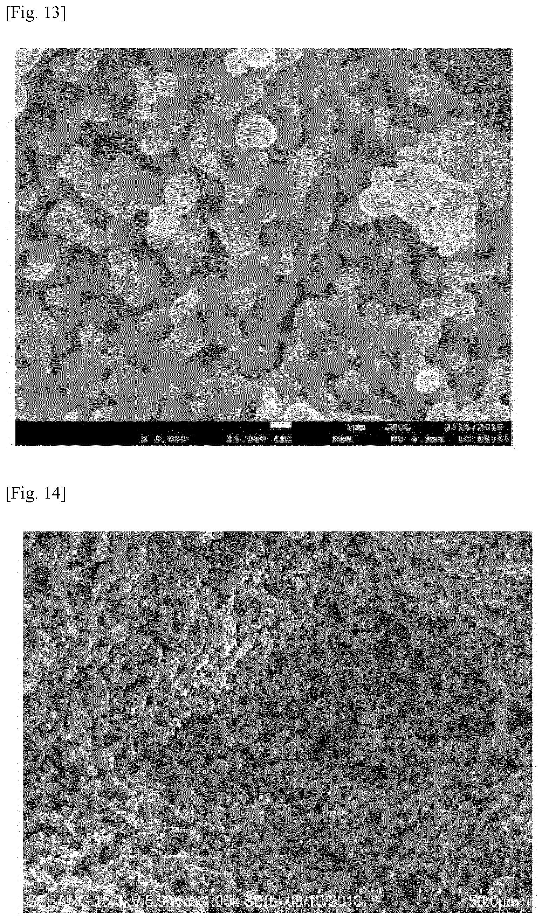

The photograph of the particles of the conductive ceramic synthesized in this way was shown in FIG. 13. As shown in FIG. 13, the ceramic synthesized by adding the rotary concentration process has round particles and a very even distribution. The average particle size was 2 *µ*m.

### Example 8

### Synthesis of Oxide-Based Conductive Ceramics of NASICON Structure with Chemical Composition of Li_{1.3}Al_{0.3}Si_{1.7}P₃O₁₂

LiCl, Al(NO₃)₃·9H₂O, NH₄H₂PO₄, and SiO₂ were calculated according to chemical equivalents, and 1.3:0.3:3:1.7 moles were added to 500 ml of distilled water. Thereafter, zirconia balls of 5 mm and 10 mm diameter were prepared in a 2:1 ratio, and then put into a 500ml container prepared so that the volume ratio of the mixed raw materials and the zirconia balls was 1:1. The rotational speed of ball milling was 200-300 RPM, and ball milling was performed for 24 hours. After removing the zirconia balls, the raw materials were firstly dried by spraying method at 170°C for 24 hours, put in an evaporation dish, and secondly dried sufficiently at 80°C for 24 hours, then the dried raw materials were ground with a mortar to make into powder and subjected to heat treatment. In the first heat treatment, the sample was heated from room temperature to 400°C for calcination, then heat treated for 4 hours, and cooled naturally until it reached 100°C or less. Secondary heat treatment was performed at 1,000°C for 4 hours to fire the sample. Then, it was pulverized to obtain oxide-based conductive ceramics of NASICON structure with a chemical composition of Li_{1.3}Al_{0.3}Si_{1.7}P₃O₁₂.

The photograph of the particles of the conductive ceramic synthesized in this way was shown in FIG. 14. As shown in FIG. 14, the ceramic synthesized by adding the spray-drying process has round particles and a very even distribution. The average particle size was 3 *µ*m.

## Claims

1. An oxide-based conductive ceramic having a NASICON structure of the following chemical formula 1.
[Chemical Formula 1] Li₁₊ₓAlₓX₂₋ₓP₃O₁₂
(X is Zr, Si, Sn, or Y, and 0<x<2)

2. An oxide-based conductive ceramic having a NASICON structure of the following chemical formula 2.
[Chemical Formula 2] Li₁₊ₓZr₂XₓP₃₋ₓO₁₂
(X=Si, Sn, Ge, or Y, and 1.5≤x≤2.3)

3. A process for synthesizing an oxide-based conductive ceramic having a NASICON structure of the following chemical formula 1 or 2, wherein the raw materials of the ceramic solid electrolyte are mixed, ball milled, and subjected to first heat treatment at 300°C to 500°C, and secondary heat treatment at 800°C to 1,200°C.
[Chemical Formula 1] Li₁₊ₓAlₓX₂₋ₓP₃O₁₂
(X is Zr, Si, Sn, or Y, and 0<x<2)
[Chemical Formula 2] Li₁₊ₓZr₂XₓP₃₋ₓO₁₂
(X=Si, Sn, Ge, or Y, and 1.5≤x≤2.3)

4. A process for synthesizing an oxide-based conductive ceramic having a NASICON structure of the following chemical formula 1 or 2, wherein the raw materials of the ceramic solid electrolyte are put in water, mixed by ball milling, the ball milled mixture is dried in a dryer, first heat treatment is performed at 300 °C to 500 °C, and secondary heat treatment is performed at 800 °C to 1200 °C.
[Chemical Formula 1] Li₁₊ₓAlₓX₂₋ₓP₃O₁₂
(X is Zr, Si, Sn, or Y, and 0<x<2)
[Chemical Formula 2] Li₁₊ₓZr₂XₓP₃₋ₓO₁₂
(X=Si, Sn, Ge, or Y, and 1.5≤x≤2.3)

5. A process for synthesizing an oxide-based conductive ceramic having a NASICON structure of the following chemical formula 1 or 2, wherein the raw materials of the ceramic solid electrolyte are put in water, mixed by ball milling, the ball milled mixture is dried first by rotary concentration or spraying, dried second in a dryer, first heat treatment is performed at 300 °C to 500 °C, and secondary heat treatment is performed at 800 °C to 1200 °C.
[Chemical Formula 1] Li₁₊ₓAlₓX₂₋ₓP₃O₁₂
(X is Zr, Si, Sn, or Y, and 0<x<2)
[Chemical Formula 2] Li₁₊ₓZr₂XₓP₃₋ₓO₁₂
(X=Si, Sn, Ge, or Y, and 1.5≤x≤2.3)
